(19) Europäisches Patentamt
European Patent Office
Office européen des brevets

(11) **EP 0 897 247 A2**

(12) **EUROPÄISCHE PATENTANMELDUNG**

(43) Veröffentlichungstag:
**17.02.1999 Patentblatt 1999/07**

(51) Int. Cl.⁶: **H04N 7/36**

(21) Anmeldenummer: **98202687.4**

(22) Anmeldetag: **11.08.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **14.08.1997 DE 19735213**
**11.10.1997 DE 19745029**

(71) Anmelder:
• **Philips Patentverwaltung GmbH**
**22335 Hamburg (DE)**
Benannte Vertragsstaaten:
**DE**

• **Koninklijke Philips Electronics N.V.**
**5621 BA  Eindhoven (NL)**
Benannte Vertragsstaaten:
**FR GB**

(72) Erfinder:
**Sommer, Peter,**
**c/o Philips Patentverwaltung GmbH**
**22335 Hamburg (DE)**

(74) Vertreter:
**von Laue, Hanns-Ulrich, Dipl.-Ing.**
**Philips Patentverwaltung GmbH,**
**Röntgenstrasse 24**
**22335 Hamburg (DE)**

(54) **Verfahren zur Berechnung von Bewegungsvektoren**

(57)    Die Erfindung gibt in zwei Ausführungsformen Verfahren an, bei denen aus Bewegungsvektoren, die für ein digitales Bildsignal vorliegen, auf Vollbilder bzw. Teilbilder bezogenen Bewegungsvektoren errechnet werden. Für auf Vollbilder bezogene Bewegungsvektoren ist das Verfahren dadurch gekennzeichnet, daß

- solche Bewegungsvektoren, die auf Halbbilder bezogen vorliegen, auf auf Vollbilder bezogene Bewegungsvektoren umgerechnet werden,
- eine Umrechnung der auf Vollbilder bezogenen Bewegungsvektoren in der Weise vorgenommen wird, daß die Bewegungsvektoren sich jeweils ausschließlich auf das vorige Vollbild beziehen,
- in einem Vollbild für einen oder mehrere Blöcke gegebenenfalls fehlende Bewegungsvektoren mittels Filterung aus den Bewegungsvektoren von Blöcken desselben Vollbildes und/oder Blöcken des vorigen Vollbildes ermittelt werden,
- aus den so vorverarbeiteten Bewegungsvektoren jeweils eine Block-Zeile und Block-Spalte, deren x-Komponenten der Bewegungsvektoren die geringste Streuung aufweisen, und jeweils eine Block-Zeile und Block-Spalte ausgewählt werden, deren y-Komponenten der Bewegungsvektoren die geringste Streuung aufweisen,
- für jedes Vollbild die globalen Bewegungsvektoren errechnet werden, wobei bei deren Berechnung benötigte x-Komponenten der vorverarbeiteten Bewegungsvektoren ausschließlich aus der für diese Komponenten ausgewählten Block-Zeile und Block-Spalte und benötigte y-Komponenten der vorverarbeiteten Bewegungsvektoren ausschließlich aus der für diese Komponenten ausgewählten Block-Zeile und Block-Spalte eingesetzt werden und wobei aus den vorverarbeiteten Bewegungsvektoren der ausgewählten Block-Zeilen und der ausgewählten Block-Spalten jeweils ein in einem mittleren Streubereich liegender Wert ausgewählt wird.

Fig.6

**Beschreibung**

Die Erfindung betrifft in zwei Ausführungsformen zwei Verfahren zur Berechnung von globalen Bewegungsvektoren, die die globale Bewegung des Bildinhalts in jeweils einem Vollbild bzw. einem Teilbild eines digitalen Bildsignals angeben, für das Bewegungsvektoren vorliegen, die jeweils für einen Block von Bildpunkten eines Halbbildes und/oder Vollbildes des Bildsignals gültig sind.

Aus dem Aufsatz "Upconversion MPEG-übertragener Bildsignale" von Appelhans, Bußmann, Schröder, veröffentlicht im 17. Jahresband (1996, Seiten 555-572) der Fernseh- und Kinotechnischen Gesellschaft ist ein Verfahren bekannt, das versucht, die blockweise vorliegenden Bewegungsvektoren eines digitalen Bildsignals für eine analoge Weiterverarbeitung des Bildinhaltes, beispielsweise für 100 Hz-Konversion, zu nutzen. Eine derartige Weiterverarbeitung dieser Vektoren hat sich jedoch als sehr ineffizient erwiesen, so daß der hierbei entstehende Aufwand etwa ebenso groß ist wie eine völlige Neuberechnung der Bewegungsvektoren.

Im Gegensatz zu diesem Verfahren ist es Aufgabe der Erfindung, globale Bewegungsvektoren anzugeben, die also Bewegungen mehr oder weniger des gesamten Bildinhaltes eines Teilbildes bzw. Vollbildes angeben, wie sie beispielsweise durch Kamerafahrten, Kamerazoomen oder Rotationen des Bildinhaltes entstehen. Dieses Verfahren soll möglichst effizient und daher aufwandsgünstig arbeiten.

Für eine erste Ausführungsform des erfindungsgemäßen Verfahrens, bei der globale Bewegungsvektoren jeweils für Vollbilder errechnet werden, ist erfindungsgemäß vorgesehen, daß

-    solche Bewegungsvektoren, die auf Halbbilder bezogen vorliegen, auf auf Vollbilder bezogene Bewegungsvektoren umgerechnet werden,

-    eine Umrechnung der auf Vollbilder bezogenen Bewegungsvektoren in der Weise vorgenommen wird, daß die Bewegungsvektoren sich jeweils ausschließlich auf das vorige Vollbild beziehen,

-    in einem Vollbild für einen oder mehrere Blöcke gegebenenfalls fehlende Bewegungsvektoren mittels Filterung aus den Bewegungsvektoren von Blöcken desselben Vollbildes und/oder Blöcken des vorigen Vollbildes ermittelt werden,

-    aus den so vorverarbeiteten Bewegungsvektoren jeweils eine Block-Zeile und Block-Spalte, deren x-Komponenten der Bewegungsvektoren die geringste Streuung aufweisen, und jeweils eine Block-Zeile und Block-Spalte ausgewählt werden, deren y-Komponenten der Bewegungsvektoren die geringste Streuung aufweisen,

-    für jedes Vollbild die globalen Bewegungsvektoren errechnet werden, wobei bei deren Berechnung benötigte x-Komponenten der vorverarbeiteten Bewegungsvektoren ausschließlich aus der für diese Komponenten ausgewählten Block-Zeile und Block-Spalte und benötigte y-Komponenten der vorverarbeiteten Bewegungsvektoren ausschließlich aus der für diese Komponenten ausgewählten Block-Zeile und Block-Spalte eingesetzt werden und wobei aus den vorverarbeiteten Bewegungsvektoren der ausgewählten Block-Zeilen und der ausgewählten Block-Spalten jeweils ein in einem mittleren Streubereich liegender Wert ausgewählt wird.

Bei dem digitalen Bildsignal, dessen Bewegungsvektoren verarbeitet werden, kann es sich beispielsweise um ein Bildsignal der MPEG-2 Norm handeln. Gemäß dieser Norm werden für Teilbilder und/oder Vollbilder Bewegungsvektoren errechnet, die die Bewegung jeweils für einen Block von Bildpunkten innerhalb des Bildes angeben. Diese Bewegungsvektoren können auf verschiedene andere Vollbilder bzw. Teilbilder zuvor übertragener oder später übertragener Teil- oder Vollbilder bezogen sein. Es müssen dabei nicht für alle Teilbilder bzw. Vollbilder Bewegungsvektoren existieren. Auch innerhalb eines Teil- bzw. Vollbildes können für einige Blöcke solche Vektoren existieren, für andere hingegen nicht. Für die Angabe der globalen Bewegung innerhalb des Bildinhaltes sind diese Vektoren bzw. Vektorfelder zunächst nicht geeignet, da sie sich nicht auf gleiche Vollbilder bzw. Teilbilder beziehen, nicht vollständig vorhanden sind und innerhalb eines Bildes verschiedene Bewegungen angeben.

Für die erste Ausführungsform des erfindungsgemäßen Verfahrens, bei dem globale Bewegungsvektoren errechnet werden sollen, die jeweils in einem Vollbild die globale Bewegung des Bildinhalts dieses Bildes über dem vorherigen Vollbild angeben, werden zunächst solche Bewegungsvektoren, die in dem ursprünglichen digitalen Bildsignal auf Halbbilder bezogen vorliegen, auf solche Bewegungsvektoren umgerechnet, die auf Vollbilder bezogen sind. Dies gilt nach wie vor blockweise für die jeweils zugeordneten Bewegungsvektoren.

Da sich wie oben erläutert die Bewegungsvektoren gegebenenfalls auf verschiedene zuvor oder nachfolgend übertragene Bilder beziehen können, werden die auf Vollbilder bezogenen Bewegungsvektoren weiter in der Weise umgerechnet, daß sie jeweils die Bewegung relativ zu dem zuvor übertragenen Vollbild angeben.

Da wie oben erläutert gegebenenfalls nicht alle Blöcke eines Vollbildes des digitalen Bildsignals Bewegungsvektoren zugeordnet sind, wird weiterhin eine Filterung von Blöcken innerhalb eines Vollbildes und/oder den Blöcken des vorherigen Vollbildes durchgeführt, bei der aus den vorhandenen Bewegungsvektoren die gegebenenfalls fehlenden errechnet werden. Hierfür können beispielsweise Medianfilterung, Mittelwertbildung oder Ähnliches eingesetzt werden.

Es liegt nun innerhalb eines jeden Vollbildes für jeden Block ein Bewegungsvektor vor, der die Bewegung des Bildinhaltes dieses Blockes relativ zum vorherigen Vollbild angibt. Diese im folgenden als vorverarbeitete Bewegungsvektoren bezeichneten Bewegungsvektoren werden zur weiteren Berechnung eingesetzt.

Innerhalb eines Vollbildes kann gegebenenfalls nicht nur eine globale Bewegung vorliegen, wie sie beispielsweise durch Kamerafahrten, Aufzoomen oder Rotationen des Bildinhalts entstehen kann, sondern es können auch Bewegungen einzelner Objekte innerhalb des Bildes vorliegen. Bei der Berechnung der globalen Bewegungsvektoren stören diese partiellen Bewegungen innerhalb des Bildinhalts, da nur die globale Bewegung ermittelt werden soll. Daher wird im folgenden versucht, Teile des Bildinhalts zu ermitteln, die ausschließlich globale Bewegungen enthalten, und es werden Bewegungsparameter ausschließlich solcher Teile für die Weiterberechnung der globalen Bewegungsvektoren eingesetzt.

Ferner werden für die Berechnung der globalen Bewegungsvektoren die x- und die y-Komponenten der Bewegungsvektoren getrennt benötigt. Daher wird die Auswahl derjenigen Bereiche des Bildes, die die globale Bewegung am besten wiedergeben, getrennt nach x-Komponenten und nach y-Komponenten der Bewegungsvektoren vorgenommen.

Es wird zunächst eine Blockzeile und eine Blockspalte gesucht, deren x-Komponenten der Bewegungsvektoren die geringste Streuung aufweisen. Bei der Auswahl dieser Blockzeile und dieser Blockspalte werden also nur die x-Komponenten der Bewegungsvektoren berücksichtigt; deren y-Komponenten bleiben unberücksichtigt. Es wird diejenige Zeile ausgewählt, deren x-Komponenten der Bewegungsvektoren die geringste Streuung aufweisen, da für diese Zeile davon ausgegangen werden kann, daß ihre Blöcke keine oder so gut wie keine lokale Bewegung in x-Richtung enthalten, da bei lokalen Bewegungen die x-Vektoren realtiv stark streuen. Auf die gleiche Weise wird diejenige Spalte ausgewählt, deren x-Komponenten die geringste Streuung aufweisen. Es sind damit im Ergebnis jeweils eine Blockzeile und eine Blockspalte gefunden worden, deren den Blöcken zugeordnete Bewegungsvektoren bezüglich ihrer x-Komponenten die geringste Streuung aufweisen und die daher für die weitere Berechnung der globalen Bewegungsparameter eingesetzt werden.

In entsprechender Weise wird jeweils eine Blockzeile und eine Blockspalte ausgewählt, deren y-Komponenten die geringste Streuung aufweisen.

Es sind damit im Ergebnis jeweils zwei Blockzeilen und zwei Blockspalten ausgewählt worden, von denen jeweils eine bezüglich der x-Komponenten und jeweils eine bezüglich der y-Komponenten die geringste Streuung aufweist und daher am besten die globale Bewegung in dieser Richtung wiedergibt.

Im nachfolgenden werden die globalen Bewegungsparameter berechnet. Es werden hierbei ausschließlich x-Komponenten aus den diesen zugeordneten ausgewählten Blockzeilen oder Blockspalten und in entsprechender Weise ausschließlich y-Komponenten aus den diesen zugeordneten ausgewählten Blockzeilen und Blockspalten eingesetzt.

Bei der Berechnung der globalen Bewegungsvektoren aus den vorverarbeiten Bewegungsvektoren der ausgewählten Blockzeilen und der ausgewählten Blockspalten wird jeweils innerhalb dieser Spalten bzw. Zeilen ein Wert ausgewählt, der in den mittleren Streubereich der jeweiligen Komponenten der Blockzeilen bzw. Blockspalten liegt.

Aufgrund dieser Werte kann eine Berechnung der Bewegungsparameter der globalen Bewegungsvektoren erfolgen, deren Berechnung abhängig davon ist, wie viele und welche Parameter bestimmt werden sollen.

Eine Ausgestaltung dieser ersten Ausführungsform der Erfindung gemäß Anspruch 2 hat zum Gegenstand, gegebenenfalls fehlende Bewegungsvektoren in den Vektorfeldern zu berechnen. Dies kann vorteilhaft mittels Medianfilterung vorgenommen werden, da bei der Medianfilterung fehlende Bewegungsvektoren durch tatsächlich existierende Bewegungsvektoren anderer benachbarter Blöcke des gleichen Vollbildes oder aus Blöcken gleicher Position des vorherigen Vollbildes übernommen werden und keine neuen Vektoren berechnet werden.

Eine weitere Ausgestaltung der ersten Ausführungsform der Erfindung gemaß Anspruch 3 hat zum Ziel, innerhalb der vorverarbeiteten Bewegungsvektoren eine Glättung dieser vorzunehmen, um gegebenenfalls vorliegende "Ausreißer" zu eliminieren. Auch dies kann vorteilhaft mittels Medianfilterung geschehen.

Wie oben bereits erläutert wurde, werden Bewegungsvektoren, die auf Teilbilder bezogen vorliegen, auf solche umgerechnet, die auf Vollbilder bezogen vorliegen. Nach der Ausgestaltung der Erfindung gemäß Anspruch 4 werden dabei die Mittelwerte der Bewegungsvektoren zweier Teilbilder eines Vollbildes berechnet. Es werden hierbei jedoch nur diejenigen Bewegungsvektoren der beiden Teilbilder ausgewertet, die sich auf jeweils Teilbilder gleicher Art beziehen. Es werden also für das erste Teilbild des Vollbildes nur solche Bewegungsvektoren berücksichtigt, die sich auf das erste Teilbild eines anderen Vollbildes beziehen. Entsprechendes gilt für Bewegungsvektoren des zweiten Teilbildes des Vollbildes.

Sollte es sich bei dem digitalen Bildsignal um ein solches der MPEG-2 Norm handeln, führt die weitere Ausgestaltung der ersten Ausführungsform der Erfindung gemäß Anspruch 5 zu einem guten Ergebnis der Berechnung der Bewegungsvektoren, da für die Bilder der B-Kategorie meist zwei nach vorne bzw. nach hinten weisende Bewegungsvektoren gegeben sind.

Aus den Bewegungsvektoren, die den Bildern der B-Kategorie der MPEG-2 Übertragungsnorm zugeordnet sind, wird dabei vorzugsweise gemäß Anspruch 6 vorgegangen.

Innerhalb der MPEG2-Bilderfolge sind Bilder dreier Kategorien B, I und P vorgesehen. Bilder der I-Kategorie sind bezüglich ihres Bildinhalts vollständig kodiert, beinhalten jedoch keine Bewegungsvektoren. Bilder der P-Kategorie sind nur bezüglich der Änderung ihres Bildinhalts kodiert und weisen Bewegungsvektoren auf, die nur in eine Richtung zeigen. Bilder der B-Kategorie sind ebenfalls nur bezüglich der Änderung ihres Bildinhalts kodiert und weisen Bewegungsvektoren auf, die in beide Richtungen weisen, die also sowohl auf zuvor übertragene wie auch auf nachfolgend übertragene Bilder weisen.

Gemäß Anspruch 6 wird aus den Bewegungsvektoren der Bilder der MPEG-Kategorie B eine Berechnung der auf das jeweils vorherige Vollbild bezogenen Bewegungsvektoren, wie sie für das erfindungsgemäße Verfahren benötigt werden, vorgenommen.

Wie oben erläutert, wird eine Auswahl der Blockzeilen und Blockspalten getrennt nach x-Komponenten und nach y-Komponenten der Bewegungsvektoren der Blöcke vorgenommen. Hierbei werden diejenigen Blockzeilen bzw. -spalten gesucht, deren jeweilige Komponente die geringste Streuung aufweist. Bei dieser Auswahl kann vorteilhaft die Ausgestaltung der ersten Ausführungsform der Erfindung gemäß Anspruch 8 eingesetzt werden. Durch die hierbei vorgenommene Differenzbildung und anschließende Aufsummierung der Beträge der Differenzen kann durch die dabei entstehende Summe bzw. deren Höhe unmittelbar festgestellt werden, welche Blockzeile bzw. Blockspalte bezüglich der gesuchten Komponente die geringste Streuung aufweist.

Die Berechnung der globalen Bewegungsvektoren kann, wie gemäß Anspruch 10 vorgesehen, mittels eine Regressionsanalyse erfolgen, die der Berechnung einer Ausgleichsgeraden bzw. -ebene entspricht und ein bekanntes mathematisches Verfahren darstellt.

Es kann auch, wie gemäß Anspruch 11 vorgesehen, eine einfache Differenzbildung benachbarter Vektoren innerhalb der ausgewählten Blockzeile und Blockspalte vorgenommen werden. Dies ist infolge der Vorauswahl der Blockzeilen bzw. Blockspalten möglich.

Bei beiden Berechnungsverfahren ist zu beachten, daß für die x-Komponenten und die y-Komponenten die jeweils diesen zugeordneten Blockzeilen und Blockspalten für die Berechnung eingesetzt werden.

Die zu berechnenden globalen Bewegungsvektoren können beispielsweise in der Form der Gleichungen gemaß Anspruch 12 aufgestellt werden. In diesem Falle können dann Parameter, die die Translation des Bildinhaltes in der jeweiligen Richtung, ein Zoomen des Bildinhalts in der jeweiligen Richtung und eine Drehung in beiden möglichen Richtungen angeben, berechnet werden. Es ist hierbei eine sehr genaue Berechnung des globalen Bildinhalts gegeben. Für eine Vereinfachung können beispielsweise die Parameter, die die Drehung des Bildinhalts angeben, weggelassen werden.

Der Anspruch 13 gibt eine mögliche Art der Berechnung der globalen Bewegungsvektoren gemäß den Gleichungen nach Anspruch 12 an. Es wird hierbei die oben erläuterte Differenzbildung benachbarter Bewegungsvektoren innerhalb der ausgewählten Blockzeilen und Blockspalten eingesetzt. Dies geschieht jedoch immer getrennt nach x- und y-Komponenten.

Mit dieser relativ einfachen Berechnung gelingt es, globale Bewegungsvektoren zu ermitteln, deren Berechnungsaufwand gering ist und die gleichwohl in sehr guter Annäherung den globalen Bildinhalt wiedergeben, da Streuungen, Ausreißer und insbesondere regionale Bewegungen innerhalb des Bildes ausgefiltert wurden.

Die bis hierher erläuterte erste Ausführungsform der Erfindung hat zum Ziel, jeweils auf Vollbilder bezogene globale Bewegungsvektoren zu berechnen. Die in Anspruch 14 angegebene zweite Ausführungsform der Erfindung hat hingegen zum Ziel, solche Bewegungsvektoren anzugeben, die jeweils auf Teilbilder bezogen sind. Die Arbeitsweise dieser zweiten Ausführungsform ist der ersten sehr ähnlich und unterscheidet sich im Detail nur dadurch, daß Bewegungsvektoren jeweils auf Teilbilder bezogen berücksichtigt und berechnet werden.

Je nach Einsatzzweck der globalen Bewegangsvektoren kann die erste oder zweite Ausführungsform der Erfindung vorteilhaft eingesetzt werden.

Die erläuterten Ausgestaltungen der ersten Ausführungsform der Erfindung sind auch auf die zweite Ausführungsform der Erfindung anwendbar, wobei jeweils statt auf Vollbilder bezogene Vektoren auf auf Teilbilder bezogene Vektoren zurückgegriffen werden muß bzw. eine Berechnung dieser erfolgt.

Nachfolgend wird anhand der Zeichnung ein Ausführungsbeispiel der ersten Ausführungsform der Erfindung erläutert. Es zeigen:

Fig. 1 eine schematische Darstellung der Verfahrensschritte,

Fig. 2 eine schematische Darstellung der Berechnung von auf Vollbildern bezogenen Bewegungsvektoren aus gegebenenfalls auf Teilbilder bezogenen Bewegungsvektoren eines MPEG-2 Signals,

Fig. 3 ein Beispiel für eine Berechnung von auf das jeweilige vorherige Vollbild bezogenen Bewegungsvektoren aus MPEG-2-Bewegungsvektoren,

Fig. 4 eine schematische Darstellung der Berechnung von fehlenden Bewegungsvektoren,

Fig. 5 eine ebensolche Darstellung der Glättung der Bewegungsvektoren und

Fig. 6 eine schematische Darstellung der Blöcke eines Vollbildes, deren vorverarbeitete Bewegungsvektoren und der Auswahl der Blockzeilen bzw. Blockspalten getrennt nach x- und y-Komponenten.

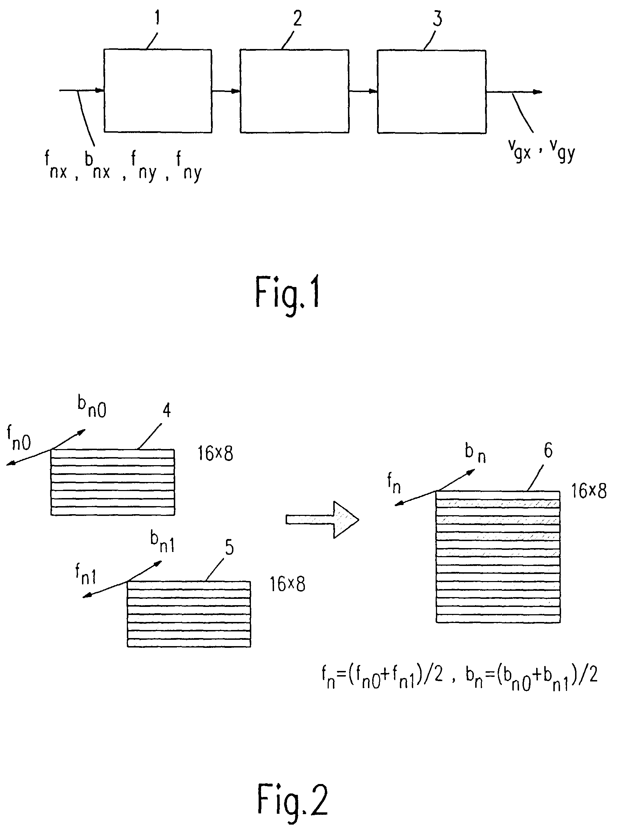

Fig. 1 zeigt in stark vereinfachter Darstellung die Verfahrensschritte des erfindungsgemäßen Verfahrens. Aus den ursprünglichen Bewegungsvektoren des digitalen Bildsignals, die auf Teilbilder und/oder Vollbilder bezogen vorliegen können und die gegebenenfalls nicht vollständig für alle Blöcke eines Teil- oder Vollbildes vorliegen, und die in der Figur mit $f_{nx}$, $b_{nx}$, $f_{ny}$ und $b_{ny}$ gekennzeichnet sind, sollen jeweils auf ein Vollbild bezogene globale Bewegungsvektoren $v_{gx}$ und $v_{gy}$ berechnet werden.

Im folgenden wird für dieses Ausführungsbeispiel davon ausgegangen, daß es sich bei dem digitalen Bildsignal um ein solches der MPEG-2-Norm handelt. Innerhalb eines solchen Signals der MPEG-2-Norm sind jeweils für Bilder der B-Kategorie Bewegungsvektoren f und b gegeben, die jedoch auf Teilbilder oder Vollbilder bezogen vorliegen können. Aus diesen wird mittels des erfindungsgemäßen Verfahrens eine Berechnung der globalen, in dem Ausführungsbeispiel auf Vollbilder bezogenen Bewegungsvektoren $v_{gx}$ und $v_{gy}$ vorgenommen.

In der Darstellung gemäß Fig. 1 symbolisiert ein erster dargestellter Block 1 die Verfahrensschritte der Umrechnung der gegebenenfalls auf Teilbilder bezogenen Bewegungsvektoren auf solche, die auf Vollbilder bezogen sind, eine Umrechnung der auf Vollbilder bezogenen Bewegungsvektoren auf Bewegungsvektoren, die sich jeweils auf das vorherige Vollbild beziehen und auf Berechnung jeweils fehlender Bewegungsvektoren mittels Filterung aus den Bewegungsvektoren desselben Vollbildes und/oder des vorherigen Vollbildes. Gegebenenfalls kann zu diesem Schritt auch noch eine Glättung der blockweise vorliegenden Bewegungsvektoren mittels Medianfilterung gehören.

Mittels des weiteren in der Fig. 1 dargestellten Blockes 2 soll der Verfahrensschritt der Auswahl der Blockzeilen und Blockspalten angedeutet werden, deren Blöcke jeweils Bewegungsvektoren aufweisen, deren x- bzw. y-Komponenten die geringste Streuung aufweisen.

Der nachfolgende Block 3 symbolisiert die Berechnung der Bewegungsparameter für die globalen Bewegungsvektoren aus den x- bzw. y-Komponenten der jeweils zugeordneten Blockzeilen und Blockspalten aus dem Verfahrensschritt gemäß Block 2.

In Fig. 2 ist exemplarisch eine Darstellung angedeutet, wie in dem ersten Verfahrensschritt gemäß Block 1 der Fig. 1 eine Umrechnung von auf auf Teilbildern bezogenen Bewegungsvektoren auf auf Vollbilder bezogenen Bewegungsvektoren vorgenommen werden kann. Beispielsweise in einem in der Fig. 2 angedeuteten ersten Teilbild 4 mit 16 x 8 Bildpunkten sind für dieses Bewegungsvektoren $f_{n0}$ und $b_{n0}$ angegeben. Für ein zweites Teilbild 5 sind Bewegungsvektoren $f_{n1}$ und $b_{n1}$ angegeben. Hierbei ist wichtig, daß nur solche Bewegungsvektoren f und b verwendet werden, die sich auf jeweils gleichartige Teilbilder beziehen.

Die Berechnung der auf das Vollbild 6, das sich aus den Teilbildern 4 und 5 zusammensetzt, bezogene Bewegungsvektoren $f_n$ und $b_n$ erfolgt mittels der in der Fig. 2 angegebenen Gleichungen. Es wird hier eine einfache Mittelwertbildung der jeweiligen Bewegungsvektoren der beiden Teilbilder 4 und 5 vorgenommen.

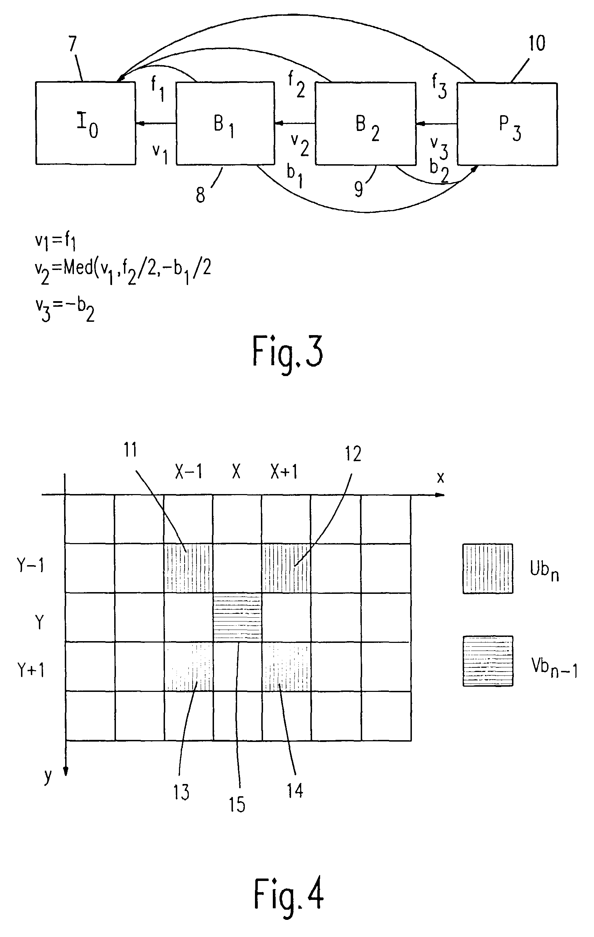

In dem Block 1 gemäß Fig. 1 soll ferner eine Umrechnung der vorliegenden Bewegungsvektoren in der Weise vorgenommen werden, daß die jeweils auf Vollbilder bezogenen Bewegungsvektoren jeweils auf das vorherige Vollbild bezogen sind. Hierzu zeigt die Darstellung gemäß Fig. 3 ein Beispiel für eine solche Umrechnung.

In dem Beispiel werden innerhalb eines MPEG-2-Datenstromes zunächst ein Bild 7 der I-Kategorie $I_0$, nachfolgend zwei Bilder 8 und 9 der B-Kategorie $B_1$ und $B_2$ und nach diesen ein Bild 10 der P-Kategorie $P_3$ übertragen. Bei allen Bildern 7 bis 10 handelt es sich um Vollbilder. Die Daten des Bildes $I_0$ enthalten dessen Bildinhalt in vollständiger Form, beinhalten jedoch keine Bewegungsvektoren. Die Daten der Bilder 8 und 9 der Kategorien B und P beinhalten jeweils nur Änderungen des Bildinhalts. Zu Bildern dieser Kategorie gehören jedoch auch Bewegungsvektoren. Zu dem Bild $P_3$ gehört ein Bewegungsvektor $f_3$, der die relative Bewegung des Bildinhaltes (blockweise) relativ zu dem Bildinhalt des Bildes $I_0$ angibt. Zu den Bildern 8 und 9 der B-Kategorie $B_1$ und $B_2$ liegen jeweils zwei Bewegungsvektoren $b_1$, $f_1$ und $f_2$, $b_2$ vor, die blockweise jeweils die Bewegung ihres Bildinhalts relativ zu den Bildern $I_0$ und $P_3$ angeben.

Für die erfindungsgemäße Berechnung der globalen Bewegungsvektoren werden vorzugsweise die MPEG-Bewegungsvektoren f und b der B-Bilder eingesetzt. Die Berechnung erfolgt nach dem in der Fig. 3 angegebenen Gleichungen. Hierdurch können die Bewegungsvektoren $v_1$, $v_2$ und $v_3$ berechnet werden, die jeweils ausschließlich die Bewegung des Bildinhalts des jeweiligen Vollbildes relativ zu dem Bildinhalt des vorherigen Vollbildes angeben. Diese Bewegungsvektoren liegen immer noch bildblockweise vor.

Gegebenenfalls liegen solche Bewegsvektoren nicht für alle Bildblöcke innerhalb eines Vollbildes vor. Innerhalb des MPEG-Datenstroms ist eine sehr flexible Kodierung gegeben, so daß gegebenenfalls für Blöcke innerhalb eines Vollbildes keine Bewegungsvektoren angegeben sind. Da diese aber für die weitere Berechnung der globalen Bewegungsvektoren vorteilhaft existieren sollten, wird eine Berechnung der fehlenden Bewegungsvektoren vorgenommen. Dies kann vorteilhaft gemäß der Vorgehensweise der schematischen Darstellung gemäß Fig. 4 geschehen. Hierbei wird eine Medianfilterung eingesetzt. Die fehlenden Bewegungsvektoren eines Blockes x und y im Vollbild $Vb_n$ der Darstellung gemäß Fig. 4 werden dabei mittels Medianfilterung aus den Bewegungsvektoren des Blockes 15 gleicher Position des vorigen Bildes $Vb_{n-1}$ und den Bewegungsvektoren der diagonalen Nachbarn 11,12,13 und 14 des gleichen Vollbildes $Vb_n$ vorgenommen.

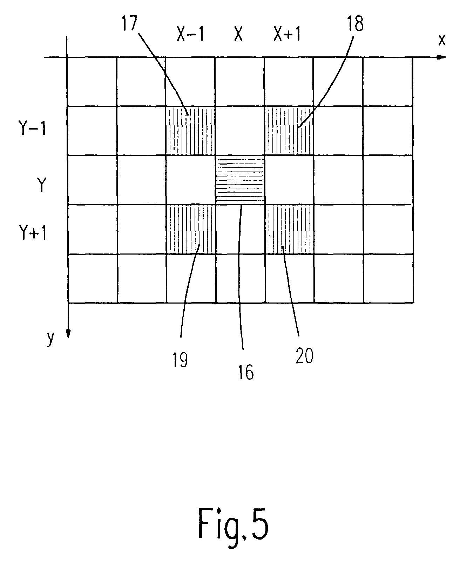

Nach den Verfahrensschritten gemäß den Fig. 1 bis 4 liegen grundsätzlich die vorverarbeiteten Bewegungsvektoren vor. Es liegen immer noch blockweise bezogene Bewegungsvektoren für jedes Vollbild vor. Um die Streuung innerhalb der Bewegungsvektoren innerhalb eines Vollbildes zu reduzieren, kann vorteilhaft ein weiterer Verfahrensschritt eingesetzt werden, der in Fig. 5 angedeutet ist. Hierbei wird eine Glättung innerhalb des Vektorfeldes eines Vollbildes vorgenommen. Dies kann vorteilhaft durch eine Medianfilterung geschehen, wobei die Bewegungsvektoren eines Blockes 16 der Position x und y gemeinsam mit den Bewegungsvektoren der jeweils diagonalen Nachbarn 17,18,19 und 20 einer Medianfilterung unterzogen werden und das Ergebnis als neue Bewegungsvektoren des Blockes 16 der Position x, y eingesetzt werden. Hierdurch wird eine Glättung des Vektorfeldes erreicht; es werden Ausreißer beseitigt.

Bezogen auf die schematische Darstellung gemäß Fig. 1 ist nunmehr die Vorverarbeitung abgeschlossen und es liegen für jedes Vollbild und für jeden Block innerhalb eines jeden Vollbildes vorverarbeitete Bewegungsvektoren vor. Es wird nun nachfolgend die Auswahl geeigneter Blockzeilen und Blockspalten vorgenommen, die in der Darstellung gemäß Fig. 1 durch den Block 2 angedeutet wird.

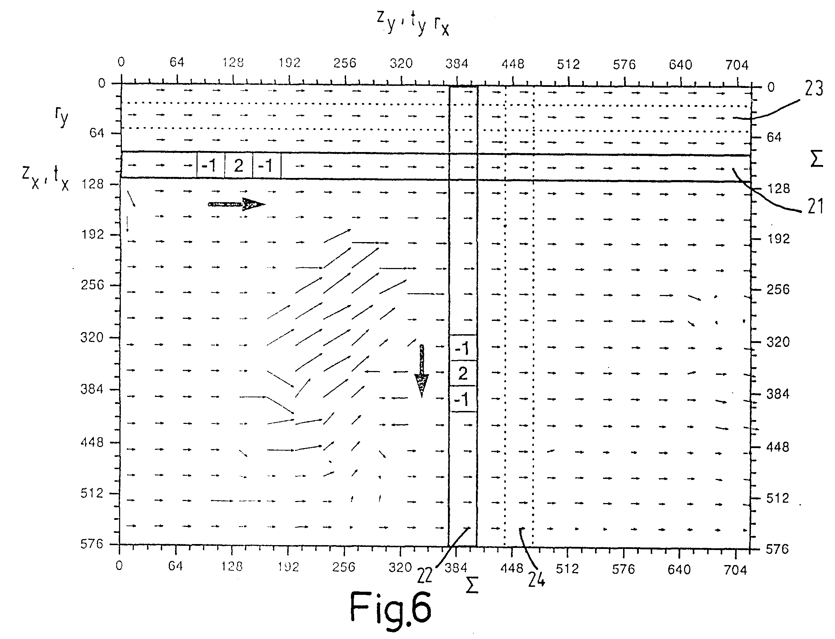

Eine solche Auswahl ist schematisch in Fig. 6 dargestellt.

Es wurde oben davon ausgegangen, daß jeder Block eines jeden Vollbildes 16 x 16 Bildpunkte enthält. Es liegen also entsprechend viele Blöcke innerhalb eines Vollbildes und damit auch entsprechend viele Bewegungsvektoren vor. In der Darstellung gemäß Fig. 6 wird zur Vereinfachung der Darstellung nur jeder zweite Block angedeutet.

Die Auswahl der Blockzeilen bzw. Blockspalten erfolgt getrennt nach x-Komponenten und nach y-Komponenten der Bewegungsvektoren.

Im ersten Verarbeitungsschritt werden ausschließlich die x-Komponenten der Bewegungsvektoren berücksichtigt. Es wird dabei zunächst eine Zeile 21 gesucht, deren x-Komponente möglichst gering streut. Hierbei kann beispielsweise eine Summe gebildet werden, bei der die x-Komponente des Bewegungsvektors jedes Blockes doppelt gewichtet wird und die Differenz zu den jeweils einfach gewichteten x-Komponenten der Bewegungsvektoren der beiden benachbarten Blöcke gebildet wird. Diese Differenz wird getrennt für jeden Block einer jeden Zeile gebildet. Für jede Zeile findet eine Aufsummierung der Beträge dieser Differenzen statt. Es wird nachfolgend diejenige Zeile 21 ausgewählt, für die diese Summe am geringsten ist. Aufgrund der Art der Filterung ist damit diejenige Zeile ausgewählt worden, deren x-Komponenten der Bewegungsvektoren die geringste Streuung aufweisen.

In gleicher Weise wird eine Spalte 22 gesucht, deren x-Komponenten die geringste Streuung aufweisen.

Nach diesen beiden Verfahrensschritten ist also jeweils eine Blockzeile 21 und eine Blockspalte 22 gefunden worden, deren x-Komponenten die geringste Streuung aufweisen. Für die weitere Verarbeitung der globalen Bewegungsvektoren wird für benötigte x-Komponenten ausschließlich auf x-Komponenten dieser ausgewählten Blockzeile 21 und dieser ausgewählten Blockspalte 22 zurückgegriffen.

In entsprechender Weise wird jeweils eine Blockzeile 23 und eine Blockspalte 24 ausgewählt, deren y-Komponenten die geringste Streuung aufweisen. Die Berechnung dieser erfolgt auf die gleiche Weise wie oben beschrieben.

Es liegen damit für diesen Verfahrensschritt im Ergebnis zwei ausgewählte Blockzeilen 21 und 23 vor, von denen eine (21) bezüglich der x-Komponenten ihrer Bewegungsvektoren und die andere (23) bezüglich der y-Komponenten ihrer Bewegungsvektoren die geringste Streuung aufweist. Ferner liegen zwei ausgewählte Spalten 22 und 24 vor, die auch jeweils bezüglich der x-Komponenten bzw. der y-Komponenten die geringste Streuung aufweisen.

Aus den nunmehr vorliegenden Bewegungsvektoren der ausgewählten Blockzeilen 21 und 23 und Blockspalten 22 und 24 kann getrennt nach x- und y-Komponenten, die ausschließlich aus den jeweils zugeordneten Blockzeilen und Blockspalten generiert werden, beispielsweise mittels Regressionsanalyse eine Berechnung der globalen Bewegungsvektoren erfolgen. Eine solche Regressionsanalyse entspricht nach bekannten mathematischen Verfahren der Berechnung einer Ausgleichsgeraden bzw. -ebene.

Da jedoch eine zeilen- und spaltenweise Vorauswahl der Bewegungsvektoren stattgefunden hat, kann auch eine vereinfachte Berechnung mittels Differenzbildung erfolgen.

Werden beispielsweise die globalen Bewegungsvektoren nach den Formeln

$$v_{gx}(x, y) = t_x + z_x \cdot x + r_x \cdot y$$

$$v_{gy}(x, y) = t_y + z_y \cdot y + r_y \cdot x$$

aufgestellt, so sind innerhalb der Bewegungsvektoren die Parameter $t_x$ und $t_y$ $z_x$, $z_y$ und $r_x$ und $r_y$ zu berechnen. Unter diesen Parametern geben die Parameter t eine translatorische Bewegung in der jeweiligen Richtung, die Parameter z eine Zoombewegung in der jeweiligen Richtung und die Parameter r eine Rotation der jeweiligen Richtung an.

Die Berechnung der Parameter kann dabei beispielsweise nach den Formeln

$$t_x = \frac{1}{n_x}\sum_x v_x(x, y) - r_x \cdot y$$

$$t_y = \frac{1}{n_y}\sum_y v_y(x, y) - r_y \cdot x$$

$$z_x = \frac{1}{n_{x-1}}\sum_x v_x(x, y) - v_x(x-1, y)$$

$$z_y = \frac{1}{n_{y-1}}\sum_y v_y(x, y) - v_y(x, y-1)$$

$$r_x = \frac{1}{n_{y-1}} \sum_y v_x \ ( \ x \ , \ y \ ) \ - \ v_x \ ( \ x \ , \ y-1)$$

$$r_y = \frac{1}{n_{x-1}} \sum_x v_y \ ( \ x \ , \ y \ ) \ - \ v_y \ ( x-1, \ y \ )$$

erfolgen. Hierbei wird jeweils eine Differenzbildung und Aufsummierung eingesetzt. Innerhalb dieser Gleichungen steht $n_x$ für die Zahl der Blöcke innerhalb einer Blockzeile und $n_y$ für die Zahl der Blöcke innerhalb einer Blockspalte. Bei den Werten $v_x(x, y)$ und $v_y(x, y)$ handelt es sich jeweils um die x- bzw. y-Komponenten der Bewegungsvektoren der jeweils zugeordneten Blockzeilen und Blockspalten. Werte wie x-1 bzw. y-1 sollen andeuten, daß jeweils der vorherige Block in der gleichen Zeile bzw. gleichen Spalte bzw. dessen Parameterkomponente zur Berechnung herangezogen wird.

Zu beachten ist hierbei, daß die Bewegungsparameter $v_x$ und $v_y$ jeweils ausschließlich aus den jeweils zugeordneten ausgewählten Blockzellen und Blockspalten eingesetzt werden. Beispielsweise für die Berechnung des Parameters $z_x$ wird jeweils eine Differenzbildung der x-Komponenten der Bewegungsvektoren benachbarter Blöcke vorgenommen. Es werden hierbei ausschließlich die x-Komponenten der für diese ausgewählten Zeile eingesetzt. Diese über die ganze Blockzeile gebildeten Differenzen werden aufsummiert und durch die Zahl der Blöcke dieser Zeile minus 1 geteilt.

In entsprechender Weise können die übrigen Parameter entsprechend diesen Formeln berechnet werden.

Die berechneten Parameter $t_x$, $t_y$, $z_x$, $z_y$, $r_x$ und $r_y$ werden dann in die oben angegebenen Gleichungen für die globalen Bewegungsvektoren eingesetzt und es liegen damit globale Bewegungsvektoren $v_x$ und $v_y$ vor, die die jeweils auf ein Vollbild bezogene globale Bewegung des Bildinhalts dieses Vollbildes angeben.

**Patentansprüche**

1.   Verfahren zur Berechnung von globalen Bewegungsvektoren, die die globale Bewegung des Bildinhalts in jeweils einem Vollbild eines digitalen Bildsignals angeben, für das Bewegungsvektoren vorliegen, die jeweils für einen Block von Bildpunkten eines Halbbildes und/oder Vollbildes des Bildsignals gültig sind, <u>dadurch gekennzeichnet</u>, daß

- solche Bewegungsvektoren, die auf Halbbilder bezogen vorliegen, auf auf Vollbilder bezogene Bewegungsvektoren umgerechnet werden,
- eine Umrechnung der auf Vollbilder bezogenen Bewegungsvektoren in der Weise vorgenommen wird, daß die Bewegungsvektoren sich jeweils ausschließlich auf das vorige Vollbild beziehen,
- in einem Vollbild für einen oder mehrere Blöcke gegebenenfalls fehlende Bewegungsvektoren mittels Filterung aus den Bewegungsvektoren von Blöcken desselben Vollbildes und/oder Blöcken des vorigen Vollbildes ermittelt werden,
- aus den so vorverarbeiteten Bewegungsvektoren jeweils eine Block-Zeile und Block-Spalte, deren x-Komponenten der Bewegungsvektoren die geringste Streuung aufweisen, und jeweils eine Block-Zeile und Block-Spalte ausgewählt werden, deren y-Komponenten der Bewegungsvektoren die geringste Streuung aufweisen,
- für jedes Vollbild die globalen Bewegungsvektoren errechnet werden, wobei bei deren Berechnung benötigte x-Komponenten der vorverarbeiteten Bewegungsvektoren ausschließlich aus der für diese Komponenten ausgewählten Block-Zeile und Block-Spalte und benötigte y-Komponenten der vorverarbeiteten Bewegungsvektoren ausschließlich aus der für diese Komponenten ausgewählten Block-Zeile und Block-Spalte eingesetzt werden und wobei aus den vorverarbeiteten Bewegungsvektoren der ausgewählten Block-Zeilen und der ausgewählten Block-Spalten jeweils ein in einem mittleren Streubereich liegender Wert ausgewählt wird.

2.   Verfahren nach Anspruch 1, <u>dadurch gekennzeichnet</u>, daß fehlende Bewegungsvektoren mittels Medianfilterung aus den Bewegungsvektoren benachbarter Blöcke desselben Vollbildes und/oder aus dem Bewegungsvektoren wenigstens eines Blockes des vorigen Vollbildes, insbesondere des Blockes gleicher Position im vorigen Vollbild, ermittelt werden.

3. Verfahren nach Anspruch 1, dadurch gekennzeichnet, daß für jeden Block eines Vollbildes die vorverarbeiteten Bewegungsvektoren vor Auswähl der Block-Zeilen und Block-Spalten einer Medianfilterung unterzogen werden, bei der der Bewegungsvektor des Blockes und die Bewegungsvektoren von Nachbarn dieses Blockes in die Filterung einbezogen werden.

4. Verfahren nach Anspruch 1, dadurch gekennzeichnet, daß die für den Fall, daß die Bewegungsvektoren auf Halbbilder bezogen vorliegen, vorgesehene Umrechnung dieser Bewegungsvektoren auf auf Vollbilder bezogene Bewegungsvektoren in der Weise vorgenommen wird, daß eine Mittelwertbildung der Bewegungsvektoren zweier Teilbilder eines Vollbildes vorgenommen wird, wobei nur Bewegungsvektoren berücksichtigt werden, die sich auf jeweils gleichartige Teilbilder beziehen.

5. Verfahren nach Anspruch 1, wobei es sich bei dem digitalen Bildsignal um ein solches der MPEG-2 Norm handelt, dadurch gekennzeichnet, daß die Umrechnung der MPEG-2-Bewegungsvektoren auf Bewegungsvektoren, die sich jeweils ausschließlich auf das vorige Vollbild beziehen, in der Weise vorgenommen wird, daß vorzugsweise Bewegungsvektoren von Bildern der B-Kategorie gemäß MPEG-2 zur Berechnung der globalen Bewegungsvektoren herangezogen werden.

6. Verfahren nach Anspruch 5, dadurch gekennzeichnet, daß die Umrechnung der MPEG-Bewegungsvektoren auf Bewegungsvektoren, die sich jeweils ausschließlich auf das vorige Vollbild beziehen, in der Weise vorgenommen wird, daß

   - bei Vollbildern der MPEG-Kategorie B, die einem Bild der MPEG-Kategorie I oder P folgen, der auf das I- oder P-Bild weisende MPEG-Bewegungsvektor f des Vollbildes B übernommen wird,
   - bei Vollbildern der MPEG-Kategorie B, die unmittelbar vor einem Bild der MPEG-Kategorie I oder P übertragen werden, der auf dieses I- oder P-Bild weisende MPEG-Bewegungsvektor b des Vollbildes B in invertierter Form übernommen wird,
   - bei Vollbildern der MPEG-Kategorie B, die zwischen Bildern der MPEG-Kategorie B übertragen werden, eine Medianfilterung aus dem bereits umgerechneten Bewegungsvektor des zuvor übertragenen Bildes der MPEG-Kategorie B, dem invertierten und mit einem ersten Gewichtungsfaktor multipliziertren Wert des auf das vorige Bild der MPEG-Kategorie I oder P weisenden b-Vektors des Vollbildes B und dem mit einem zweiten Gewichtungsfaktor multipliziertren Wert des auf das nächste Bild der MPEG-Kategorie I oder P weisenden f-Vektors des Vollbildes B, wobei die Größe der Gewichtungsfaktoren von dem Abstand des Bildes der B-Kategrie zu den Bildern der I- oder P-Kategorie abhängt.

7. Verfahren nach Anspruch 1, dadurch gekennzeichnet, daß die vorverarbeiteten Bewegungsvektoren jeweils für Blöcke von 16x16 Bildpunkten eines Vollbildes ermittelt werden.

8. Verfahren nach Anspruch 1, dadurch gekennzeichnet, daß die Auswahl der Block-Zeilen und der Block-Spalten eines Vollbildes, deren vorverarbeitete Bewegungsvektoren die globale Bewegung des Bildinhalts am besten wiedergeben, in der Weise getrennt für die x- und y-Komponenten der Bewegungsvektoren vorgenommen wird, daß in jeder Block-Zeile und jeder Block-Spalte eines Vollbildes für jeden Block eine Differenzbildung aus den doppelt gewichteten x-Komponenten der Bewegungsvektoren dieses Blockes und den x-Komponenten der Bewegungsvektoren der beiden in der Zeile bzw. Spalte benachbarten Blöcke vorgenommen wird, daß diejenige Zeile und diejenige Spalte der x-Komponenten ausgewählt werden, für die Summe der Beträge dieser zu allen Blöcken der Zeile bzw. Spalte gebildeten Differenzen am Kleinsten ist, daß in jeder Block-Zeile und jeder Block-Spalte eines Vollbildes für jeden Block eine Differenzbildung aus den doppelt gewichteten y-Komponenten der Bewegungsvektoren dieses Blockes und den y-Komponenten der Bewegungsvektoren der beiden in der Zeile bzw. Spalte benachbarten Blöcke vorgenommen wird und daß diejenige Zeile und Spalte der y-Komponenten ausgewählt werden, für die Summe der Beträge dieser zu allen Blöcken der Zeile bzw. Spalte gebildeten Differenzen am Kleinsten ist.

9. Verfahren nach Anspruch 8, dadurch gekennzeichnet, daß bei der Auswahl der Block-Zeilen und der Block-Spalten eines Vollbildes an dessen Rand angeordnete Block-Zeilen und Block-Spalten nicht berücksichtigt werden, insbesondere daß die Bewegungsvektoren der Blöcke der ersten und letzten Block-Zeile jedes Vollbildes sowie der beiden ersten und letzten Block-Spalten jedes Vollbildes nicht berücksichtigt werden.

10. Verfahren nach Anspruch 1, dadurch gekennzeichnet, daß aus den vorverarbeiteten Bewegungsvektoren der ausgewählten Block-Zeilen und Block-Spalten mittels einer Regressionsanalyse die globalen Bewegungsvektoren berechnet werden.

11. Verfahren nach Anspruch 1, <u>dadurch gekennzeichnet</u>, daß die Berechnung der globalen Bewegungsvektoren aus den vorverarbeiteten Bewegungsvektoren der ausgewählten Block-Zeilen und Block-Spalten mittels einer vereinfachten Berechnung durch Differenzbildung benachbarter Vektoren vorgenommen wird.

12. Verfahren nach Anspruch 1, dadurch gekennzeichnet, daß die globalen Bewegungsvektoren $v_{gx}$ und $v_{gy}$ in der Form

$$v_{gx}(x, y) = t_x + z_x \cdot x + r_x \cdot y$$

und

$$v_{gy}(x, y) = t_y + z_y \cdot y + r_y \cdot x$$

aufgestellt werden, wobei die Parameter $t_x$ und $t_y$ einer Translation des Bildinhalts in x- bzw. in y-Richtung, die Parameter $z_x$ und $z_y$ einem Zoomen des Bildinhalts in x- bzw. in y-Richtung und die Parameter $r_x$ und $r_y$ einer Drehung des Bildinhalts entsprechen.

13. Verfahren nach Anspruch 11, <u>dadurch gekennzeichnet</u>, daß die Berechnung der Parameter der globalen Bewegungsvektoren $v_{gx}$ und $v_{gy}$ aus den vorverarbeiteten Bewegungsvektoren $v_x$ und $v_y$ der ausgewählten Block-Zeile und der ausgewählten Block-Spalte nach den Formeln

$$t_x = \frac{1}{n_x}\sum_x v_x(x, y) - r_x \cdot y$$

$$t_y = \frac{1}{n_y}\sum_y v_y(x, y) - r_y \cdot x$$

$$z_x = \frac{1}{n_{x-1}}\sum_x v_x(x, y) - v_x(x-1, y)$$

$$z_y = \frac{1}{n_{y-1}}\sum_y v_y(x, y) - v_y(x, y-1)$$

$$r_x = \frac{1}{n_{y-1}} \sum_y v_x\,(\,x\,,\,y\,) - v_x\,(\,x\,,\,y-1)$$

$$r_y = \frac{1}{n_{x-1}} \sum_x v_y\,(\,x\,,\,y\,) - v_y\,(x-1,\,y\,)$$

vorgenommen wird, wobei $n_x$ die Anzahl der Vektoren bzw. Blöcke einer Block-Zeile und $n_y$ die Anzähl der Vektoren bzw. Blöcke einer Block-Spalte angeben.

14. Verfahren zur Berechnung von globalen Bewegungsvektoren, die die globale Bewegung des Bildinhalts in jeweils einem Teilbild eines digitalen Bildsignals angeben, für das Bewegungsvektoren vorliegen, die jeweils für einen Block von Bildpunkten eines Halbbildes und/oder Vollbildes des Bildsignals gültig sind, <u>dadurch gekennzeichnet,</u> daß

- solche Bewegungsvektoren, die auf Vollbilder bezogen vorliegen, auf auf Teilbilder bezogene Bewegungsvektoren umgerechnet werden,
- eine Umrechnung der auf Teilbilder bezogenen Bewegungsvektoren in der Weise vorgenommen wird, daß die Bewegungsvektoren sich jeweils ausschließlich auf das vorige Teilbild beziehen,
- in einem Teilbild für einen oder mehrere Blöcke gegebenenfalls fehlende Bewegungsvektoren mittels Filterung aus den Bewegungsvektoren von Blöcken desselben Teilbildes und/oder Blöcken des vorigen Teilbildes ermittelt werden,
- aus den so vorverarbeiteten Bewegungsvektoren jeweils eine Block-Zeile und Block-Spalte, deren x-Komponenten der Bewegungsvektoren die geringste Streuung aufweisen, und jeweils eine Block-Zeile und Block-Spalte ausgewählt werden, deren y-Komponenten der Bewegungsvektoren die geringste Streuung aufweisen,
- für jedes Teilbild die globalen Bewegungsvektoren errechnet werden, wobei bei deren Berechnung benötigte x-Komponenten der vorverarbeiteten Bewegungsvektoren ausschließlich aus der für diese Komponenten ausgewählten Block-Zeile und Block-Spalte und benötigte y-Komponenten der vorverarbeiteten Bewegungsvektoren ausschließlich aus der für diese Komponenten ausgewählten Block-Zeile und Block-Spalte eingesetzt werden und wobei aus den vorverarbeiteten Bewegungsvektoren der ausgewählten Block-Zeilen und der ausgewählten Block-Spalten jeweils ein in einem mittleren Streubereich liegender Wert ausgewählt wird.

Fig.1

$$f_n = (f_{n0} + f_{n1})/2 \; , \; b_n = (b_{n0} + b_{n1})/2$$

Fig.2

$$v_1 = f_1$$
$$v_2 = \mathrm{Med}(v_1, f_2/2, -b_1/2$$
$$v_3 = -b_2$$

## Fig.3

## Fig.4

Fig.5

Fig.6